**Europäisches Patentamt**

**European Patent Office**

**Office européen des brevets**

(19)

(11) Numéro de publication : **0 325 065 B1**

# (12) FASCICULE DE BREVET EUROPEEN

(45) Date de publication du fascicule du brevet :
22.07.92 Bulletin 92/30

(51) Int. Cl.⁵ : **C08F 2/32, C09D 11/10**

(21) Numéro de dépôt : **88403116.2**

(22) Date de dépôt : **08.12.88**

(54) **Dispersions eau dans huile de polymères hydrophiles, à base d'acide acrylique partiellement ou totalement salifié par de l'ammoniac, leur procédé de préparation et leur application notamment dans l'impression pigmentaire.**

(30) Priorité : **18.12.87 FR 8717743**

(43) Date de publication de la demande :
26.07.89 Bulletin 89/30

(45) Mention de la délivrance du brevet :
22.07.92 Bulletin 92/30

(84) Etats contractants désignés :
**AT BE CH DE ES FR GB GR IT LI LU NL SE**

(56) Documents cités :
**EP-A- 0 068 955**
**DE-A- 3 641 700**

(73) Titulaire : **SOCIETE FRANCAISE HOECHST**
**Société anonyme dite:**
**3, avenue du Général de Gaulle**
**F-92800 Puteaux (FR)**

(72) Inventeur : **Cabestany, Jean**
**127 Boulevard Maxime Gorki**
**F-93240 Stains (FR)**
Inventeur : **Marchant, Dominique**
**37, rue A. Gallaix**
**F-60270 Lamorlaye (FR)**

(74) Mandataire : **Rinuy, Santarelli**
**14, avenue de la Grande Armée**
**F-75017 Paris (FR)**

EP 0 325 065 B1

## Description

La présente invention concerne des dispersions eau dans huile de polymères hydrophiles, à base d'acide acrylique partiellement ou totalement salifié par de l'ammoniac, leur procédé de préparation et leur application notamment dans l'impression pigmentaire.

Pour l'impression pigmentaire sur tissu, on recherche des pâtes d'impression présentant des propriétés physiques, chimiques et rhéologiques extrêmement performantes, autorisant d'une part, une mise en oeuvre aisée, sûre, économique, reproductible et non polluante, un bon rendement coloristique, un lavage facile des matériels après usage et l'emploi de tissus de nature contenant éventuellement des électrolytes et permettant d'obtenir, d'autre part, des tissus imprimés possédant non seulement une bonne solidité aux lavages ménagers, aux frottements et à la lumière, mais également un toucher agréable, un aspect plaisant, une bonne vivacité du coloris, des dessins nets et bien délimités, et un bon unisson.

Le brevet de la République Fédérale d'Allemagne N° 3641700 décrit un procédé de préparation de dispersions eau dans huile de polymérisats réticulés, gonflables à l'eau et utilisables dans l'impression pigmentaire, consistant à effectuer une polymérisation en émulsion eau dans huile d'un mélange de monomères hydrosolubles en présence d'un agent réticulant polyéthylénique, d'émulsifiants du type eau dans huile, d'émulsifiants présentant une valeur HLB supérieure ou égale à 10 et d'amorceurs hydrosolubles.

Les pâtes d'impression proposées jusqu'à présent ne permettent pas d'atteindre simultanément tous les objectifs recherchés par l'homme de métier tant sur le plan économique que sur le plan de la qualité des impressions. Notamment, les épaississants pour impression pigmentaire disponibles dans le commerce, se présentent soit sous forme de solide difficile à mettre en suspension, soit sous forme de dispersion peu stable dans le temps ce qui nécessite un dosage de matière active avant leur emploi.

Or, la présente invention concerne de nouvelles dispersions eau dans huile stables de polymères hydrophiles à base d'acide acrylique partiellement ou totalement salifié par de l'ammoniac, permettant d'obtenir des pâtes d'impression donnant entière satisfaction à l'utilisateur.

Les dispersions eau dans huile de polymères hydrophiles de la présente invention sont caractérisées par le fait qu'elles contiennent pondéralement :

a)
- de 65 à 75 % d'une phase aqueuse dispersée dont 35 à 50 % de son poids est constitué par un copolymère hydrophile, de masse moléculaire supérieure à 3.000.000, à base de, en proportions molaires :
- 0 à 50 % d'acrylamide,
- 0,008 à 0,1 % d'acide bisacrylamidoacétique partiellement ou totalement salifié par de l'ammoniac,
- le complément à 100 % par de l'acide acrylique dont 65 à 100 % est sous la forme d'acrylate d'ammonium,

b)
- de 3 à 7% d'un système émulsifiant, désigné par la suite E,

c)
- le complément à 100 % par une phase huile, désignée par la suite H.

Le système émulsifiant E présente globalement une valeur HLB supérieure à 7 et il est constitué par un mélange d'au moins trois tensioactifs dont plus de 50 % en poids est apporté par au moins un tensioactif de HLB compris entre 3 et 5 et le complément à 100 % est formé par au moins deux tensioactifs présentant individuellement un HLB compris entre 11 et 14.

Une définition du HLB est donnée par W.C. GRIFFIN dans "Classification of Surface Active Agents by HLB" J. Soc. Cosmetic Chemists, 1950, page 311 et suivantes.

Les tensioactifs de HLB compris entre 3 et 5 sont notamment les esters de sorbitanne tels que le monooléate de sorbitanne, le sesquioléate de sorbitanne. Les tensioactifs de HLB compris entre 11 et 14 sont notamment les alkylphénols éthoxylés avec de 6 à 30 moles d'oxyde d'éthylène tels que le nonylphénol éthoxylé avec 8 moles d'oxyde d'éthylène.

La phase huile continue, H, est constituée par un ou plusieurs hydrocarbures, liquides à la température ambiante, contenant moins de 20 % en poids d'hydrocarbures aromatiques et possédant simultanément une masse volumique, déterminée à 20°C, supérieure à 0,8 g/cm$^3$, une viscosité cinématique, déterminée à 20°C, supérieure à 10 mm$^2$/s et un point d'ébullition supérieur à 250°C.

De tels hydrocarbures sont couramment utilisés comme lubrifiants pour machine de précision. En raison des caractéristiques de la phase huile, H, la fraction volumique des dispersions selon l'invention est voisine de 0,7. Rappelons que l'on désigne par fraction volumique d'une dispersion, le rapport volume de la phase aqueuse sur volume total de la dispersion.

Les dispersions selon l'invention peuvent contenir également divers additifs habituels à ce type de produit tels que des agents chélatants, des biocides, des antioxygène.

2

EP 0 325 065 B1

Les dispersions selon l'invention présentent simultanément d'une part, une viscosité Brookfield (déterminée à 20°C à la vitesse de 20 tours par minute) comprise entre 1,5 et 3,5 Pa.s, laquelle est considérablement augmentée par dilution pour atteindre 25 à 40 Pa.s à 1 % en poids de copolymère sec dans une solution aqueuse de chlorure de sodium 17 mM et d'autre part, un comportement rhéofluidifiant classique (pseudoplastique) avec une équation rhéologique d'Ostwald: contrainte en fonction du gradient de vitesse, du type $ax^m$ avec m inférieur à 1. En outre, ces dispersions offrent une excellente stabilité tant à la sédimentation qu'au cisaillement.

Afin de pouvoir appréhender l'ordre de grandeur du poids moléculaire moyen des copolymères présents dans les dispersions de l'invention, par application de l'équation de I. Noda et T. Tsuge, J. Phys. Chem., 1970, 74, 710, on a déterminé la viscosité intrinsèque d'un copolymère obtenu en effectuant la polymérisation avec les mêmes monomères et dans les mêmes conditions mais en l'absence de monomères réticulants. On obtient ainsi une viscosité intrinsèque déterminée à 25°C en solution 100 mM de bromure de sodium comprise entre 30 et 40 dl/g ce qui correspond à un copolymère linéaire de poids moléculaire compris entre 4.000.000 et 6.000.000. Les mêmes copolymères réticulés ont certainement une masse moléculaire supérieure.

La stabilité des dispersions de l'invention a été déterminée en les soumettant d'une part à une sédimentation centrifuge durant 30 minutes sous une accélération de 2000 G à 20°C et d'autre part, à un cisaillement réalisé en les agitant durant 10 minutes à 10.000 tours par minute. Dans le premier test, on observe un relargage de la phase huile inférieur à 1 % en volume et une sédimentation inférieure à 5 % en volume. Dans le deuxième test, test de stabilité mécanique, les dispersions restent inchangées et conservent toutes leurs propriétés.

Le phase aqueuse dispersée des dispersions selon l'invention est généralement un agrégat de particules de copolymère gonflé d'eau, dont la taille, déterminée par la méthode de diffusion de lumière quasi élastique après dilution de la dispersion dans 1000 fois son volume de sérum de la dispersion, est comprise entre 200 et 300 nanomètres.

Des dispersions préférées selon l'invention consistent, en proportions molaires, en :
– 30 à 40 % d'acrylamide,
– 0,008 à 0,05 % de bisacrylamidoacétate d'ammonium,
– le complément à 100 % par de l'acrylate d'ammonium.
D'autres dispersions préférées, consistent , en proportions molaires en :
– 25 à 50 % d'acrylamide,
– 0,008 à 0,05 % d'acide bisacrylamidoacétique dont plus de 50 % est sous la forme de bisacrylamidoacétate d'ammonium,
– le complément à 100 % par de l'acide acrylique dont 65 % à 75 % est sous forme d'acrylate d'ammonium, ou bien :
– 5 % d'acrylamide,
– 0,008 à 0,05 % d'acide bisacrylamidoacétique dont plus de 50 % est sous la forme de bisacrylamidoacétate d'ammonium,
– le complément à 100 % par de l'acide acrylique dont 65 % à 75 % est sous la forme d'acrylate d'ammonium.

Selon l'invention, les dispersions définies précédemment peuvent être préparées par un procédé caractérisé en ce que :
a) l'on prépare une solution aqueuse des monomères à une concentration comprise entre 35 et 50 % en poids et présentant un pH compris entre 5,2 et 7 ;
b) l'on émulsionne ensuite à l'aide d'une turbine, en atmosphère inerte, la solution aqueuse des monomères précédente dans la phase huile en présence du ou des tensioactifs de HLB inférieur à 5 jusqu'à obtention d'une émulsion eau dans huile présentant un palier de viscosité compris entre 3 et 4 Pa.s ;
c) l'on amorce la polymérisation en introduisant dans l'émulsion obtenue parfaitement désoxygénée, sous agitation, en atmosphère inerte et à une température comprise entre 5 et 15°C, moins de 0,05 % en poids par rapport au poids des monomères mis en oeuvre, d'un système amorceur rédox liposoluble générateur de radicaux libres puis qu'on laisse se développer la réaction de polymérisation sans refroidissement extérieur, de manière quasi adiabatique et qu'enfin l'on termine la polymérisation par un chauffage à une température voisine de 80°C :
d) l'on concentre si nécessaire, le milieu réactionnel par distillation sous vide à une température inférieure à 65°C afin d'obtenir la concentration en matières sèches désirée et qu'enfin l'on incorpore sous agitation le reste des tensioactifs et, si désiré, des additifs habituels à ce type de dispersion.

Comme système amorceur rédox liposoluble on peut utiliser avantageusement celui décrit dans le brevet européen N° 0.100.693.

Selon une variante du procédé selon l'invention, on peut introduire certains additifs tels que notamment

3

les agents chélatants directement dans la solution aqueuse des monomères.

Les dispersions selon la présente invention présentent d'intéressantes propriétés épaississantes associées à une excellente stabilité et à une bonne rhéologie qui les rendent extrêmement performantes dans l'obtention des pâtes pour l'impression pigmentaire. Les pâtes ainsi obtenues sont peu sensibles aux électrolytes, stables dans le temps et elles autorisent des impressions reproductibles sans qu'il soit nécessaire de vérifier et d'ajuster leur composition.

Les exemples donnés ci-après illustrent l'invention sans toutefois la limiter.

EXEMPLE 1

On émulsionne, en atmosphère inerte, à une température comprise entre 5 et 10°C, à l'aide d'une turbine jusqu'à obtention d'une émulsiton eau dans huile présentant une viscosité Brookfield stable de 3800 mPa.s, une solution aqueuse constituée de :
- 68,4 g (950 mmoles) d'acide acrylique,
- 3,55 g (50 mmoles) d'acrylamide,
- 33,1 mg (0,167 mmole) d'acide bisacrylamidoacétique,
- 10,84 g (636,5 mmoles) d'ammoniac,
- 113 g d'eau.

dans une solution organique, désignée par la suite, S, constituée de :
- 63 g (78 ml) d'huile minérale, de point d'ébullition compris entre 310°C et 340°C, présentant une viscosité cinématique à 20°C de 10,6 mm²/s (déterminée selon la norme ASTM D 445), une masse volumique à 15°C de 0,806 g/cm³ et contenant 80 % de paraffines et 20 % d'hydrocarbures naphténiques,
- 6 g de sesquioléate de sorbitanne (HLB = 3.7).

On désoxygène ensuite cette émulsion par un barbotage d'azote, puis on introduit successivement, sous agitation, à une température comprise entre 5°C et 10°C :
- 5,8 mg (0,038 mmole) d'hydroperoxyde de cumène,
- 8,3 mg (0,070 mmole) de chlorure de sulfinyle (chlorure de tionyle).

La réaction de polymérisation démarre rapidement, avec une élévation moyenne de la température de 2 à 3°C par minute avec des pointes de 20°C par minute. Le milieu réactionnel atteint une température de 80°C en quelques minutes, température que l'on maintient pendant 1 heure par un léger chauffage extérieur.

On refroidit ensuite le milieu réactionnel puis on lui incorpore sous agitation :
- 2,7 g de nonylphénol éthoxylé avec 8 moles d'oxyde d'éthylène, (HLB = 12.3),
- 2,7 g de nonylphénol éthoxylé avec 10 moles d'oxyde d'éthylène, (HLB : 13.3).

On obtient ainsi 270 g d'une dispersion eau dans huile présentant les caractéristiques suivantes :
- fraction volumique : 0,68 ;
- viscosité Brookfield (déterminée à 25°C à la vitesse de 20 tours par minute) : 2 Pa.s ;
- stabilité à la sédimentation : moins de 1 % en volume de relargage de la phase huile après 30 minutes de centrifugation sous 2000 G ;
- stabilité mécanique : dispersion inchangée après 10 minutes d'agitation avec une turbine à 10.000 tours par minute ;
- taux de matières actives : 30,5 % ;
- taille des particules : 200 à 300 nanomètres (déterminée avec un appareil MALVERN Autosizer II, à diffusion de lumière), après dilution de 1000 fois avec la solution S ;
- rhéologie d'une suspension aqueuse de polymère :

Tau = 7,70 D $^{0,28}$ (où tau représente la contrainte exprimée en pascal et D le gradient de vitesse exprimé en seconde $^{-1}$) ; détermination effectuée avec un rhéomat de la Société CONTRAVES.
- Viscosité Brookfield d'une dispersion aqueuse contenant 1 % en poids de polymère exprimé en sec : 35 Pa.s (déterminée à 25°C à la vitesse de 20 tours par minute);
- Viscosité Brookfield d'une suspension contenant 1 % en poids de polymère exprimé en sec dans une solution aqueuse de chlorure de sodium 17 mM : 16 Pa.s.

EXEMPLE 2

On reproduit l'exemple 1 en n'utilisant que 24,8 mg (0,125 mmole) d'acide bisacrylamidoacétique. On obtient ainsi 271 g d'une dispersion eau dans huile présentant les mêmes caractéristiques que la dispersion obtenue à l'exemple 1 sauf les viscosités Brookfield à 1 % en poids dans l'eau et dans une solution aqueuse de chlorure de sodium 17 mM qui sont respectivement de 31 Pa.s et de 14,2 Pa.s.

4

EXEMPLES 3 à 9

On reproduit l'exemple 1 avec les quantités données dans le tableau 1 dans lequel les abréviations ont la signification suivante :

ABAA : acide bisacrylamidoacétique.
$TA_1$ : sesquioléate de sorbitanne.
$TA_2$ : nonylphénol éthoxylé avec 8 moles d'oxyde d'éthylène.
$TA_3$ : nonylphénol éthoxylé avec 10 moles d'oxyde d'éthylène.
Huile $H_1$ : huile utilisée dans l'exemple 1.
MA : concentration en matière active.
O : Fraction volumique.
Vi du latex : viscosité Brookfield du latex déterminée à 20°C à la vitesse de 20 tours par minute et exprimée en mPa.s.
Vi à 1 % eau : viscosité Brookfield à 1 % en poids de polymère sec dans l'eau, déterminée à exprimée en Pa.s.
Vi à 1 % dans
ClNa à 0,1 % : viscosité Brookfield à 1 % en poids de polymère sec dans une solution aqueuse de chlorure de sodium 17 mM, déterminée à 20°C à la vitesse de 20 tours par minute, exprimée en Pa.s.
Stabilité : stabilité à la sédimentation après 30 minutes de centrifugation sous 2000 G. Cette stabilité est notée excellente si on observe moins de 1 % en volume de relargage de la phase huile.

TABLEAU I

| N° des exemples | 3 g | mmoles | 4 g | mmoles | 5 g | mmoles | 6 g | mmoles | 7 g | mmoles | 8 g | mmoles | 9 g | mmoles |
|---|---|---|---|---|---|---|---|---|---|---|---|---|---|---|
| acide acrylique | 64,85 | 900 | 57,65 | 800 | 50,45 | 700 | 43,25 | 600 | 36 | 500 | 43,25 | 600 | 50,45 | 700 |
| acrylamide | 7,11 | 100 | 14,22 | 200 | 21,30 | 300 | 28,43 | 400 | 35,55 | 500 | 28,45 | 400 | 21,30 | 300 |
| ammoniac | 10,27 | 603 | 9,13 | 536 | 7,99 | 469 | 6,85 | 402 | 5,70 | 335 | 10,22 | 600 | 11,92 | 700 |
| ABAA | 0,025 | 0,12 | 0,025 | 0,12 | 0,025 | 0,12 | 0,025 | 0,12 | 0,025 | 0,12 | 0,025 | 0,12 | 0,025 | 0,12 |
| Poids monomères | 82,25 | | 81,02 | | 79,76 | | 78,53 | | 77,27 | | 81,95 | | 83,69 | |
| $TA_1$ | 6 | | 6 | | 6 | | 6 | | 6 | | 6 | | 6 | |
| eau | 113,93 | | 115,16 | | 116,42 | | 117,63 | | 118,91 | | 116,23 | | 112,49 | |
| poids phase aqueuse | 202,2 | | 202,2 | | 202,2 | | 202,2 | | 202,2 | | 202,2 | | 202,2 | |
| huile $H_1$ | 63 | | 63 | | 63 | | 63 | | 63 | | 63 | | 63 | |
| $TA_2$ | 2,7 | | 2,7 | | 2,7 | | 2,7 | | 2,7 | | 2,7 | | 2,7 | |
| $TA_3$ | 2,7 | | 2,7 | | 2,7 | | 2,7 | | 2,7 | | 2,7 | | 2,7 | |
| poids total | 270,6 | | 270,6 | | 270,6 | | 270,6 | | 270,6 | | 270,6 | | 270,6 | |
| MA | 30,35 | | 29,9 | | 29,43 | | 28,98 | | 28,51 | | 30,24 | | 30,88 | |
| 0 | 0,68 | | 0,68 | | 0,68 | | 0,68 | | 0,68 | | 0,68 | | 0,68 | |
| Vi du latex | 2700 | | 2850 | | 2500 | | 2850 | | 3350 | | 1900 | | 2000 | |
| Vi à 1 % eau | 22 | | 27,5 | | 33,2 | | 36 | | 36 | | 31 | | 27,5 | |
| Vi à 1 % dans ClNa 0,1 % | 12,8 | | 14 | | 17 | | 14 | | 12 | | 14 | | 18,5 | |
| stabilité | excellente | | excellente | | excellente | | excellente | | excellente | | excellente | | excellente | |
| pH de la phase aqueuse avant polymérisation | | 5,2 | | 5,2 | | 5,2 | | 5,2 | | 5,2 | | 6,8 | | 6,8 |

EP 0 325 065 B1

EXEMPLE 10 - Exemple de comparaison

On reproduit l'exemple 1 en utilisant comme huile 78 ml (58,5 g) de paraffines linéaires en $C_{10}$ - $C_{13}$, de point d'ébullition compris entre 184°C et 211°C, présentant une masse volumique à 15°C de 0,75 g/cm$^3$ et une viscosité cinématique de 1,93 mm$^2$/s déterminée à 20°C.

On obtient ainsi une dispersion eau dans huile présentant les caractéristiques suivantes :
– fraction volumique : 0,68 ;
– viscosité Brookfield déterminée à 20°C, à la vitesse de 20 tours par minute : 1300 mPa.s ;
– stabilité à la sédimentation : très mauvaise. On observe après 30 minutes de centrifugation sous 2000 G, 10 % de relargage de la phase huile et la formation d'un dépôt en culot d'environ 50 %.

EXEMPLE 11 - Exemple d'application

On prépare une coupure pour pâte d'impression pigmentaire en mélangeant, à la température ambiante :
– 30 g de liant à base de copolymères acryliques (liant IMPERON N 66, commercialisé par la Demanderesse),
– X g d'une dispersion obtenue selon un des exemples 1-9 de manière à obtenir une coupure présentant une viscosité Haake de 7200 mPa.s.
– suffisamment d'ammoniaque à 50 % pour obtenir un pH de 7,
– la quantité d'eau nécessaire pour obtenir 500 g de coupure.

On mélange ensuite 200 g de la coupure précédente avec 3 de pigment (Bleu IMPERON KB, commercialisé par la Demanderesse), puis la pâte pigmentaire ainsi obtenue est utilisée pour imprimer une popeline 100 % coton, à l'aide d'une machine à imprimer de laboratoire équipée d'un cadre de 77 mesh (cf norme française NFX 11-508).

Le tissu imprimé est ensuite séché à 120°C durant 50 secondes puis il est traité pendant 80 secondes à une température de 170°C et enfin, après refroidissement, il est soumis aux texts suivants :
Ta/ test de solidité aux frottements selon la norme française NF G07-016,
Tb/ test de solidité aux lavages ménagers. Selon ce text un échantillon de tissu est soumis à 1,3,5 et 10 lavages ménagers successifs avant d'être comparé à un échantillon témoin,
Tc/ test qualitatif de rendement coloristique,
Td/ test qualitatif du toucher,
Te/ test qualitatif de l'unisson du coloris,
Tf/ test qualitatif du transpercement de l'échantillon.

Les résultats obtenus sont donnés dans le tableau II.

EP 0 325 065 B1

## TABLEAU II

|  | X | Ta | Tb | Tc | Td | Te | Tf |
|---|---|---|---|---|---|---|---|
| dispersion selon exemple 1 | 13,2 | E | E | E | E | E | E |
| dispersion selon exemple 2 | 13,5 | E | E | E | E | E | E |
| dispersion selon exemple 6 | 12,4 | E | E | E | E | E | TB |
| dispersion selon exemple 7 | 13,1 | E | E | TB | E | E | TB |
| dispersion selon exemple 8 | 13,1 | E | E | TB | E | TB | TB |

E : Excellent.

TB : Très bien.

## Revendications

1. Dispersions eau dans huile, stables, de polymères hydrophiles à base d'acide acrylique partiellement ou totalement salifié par de l'ammoniac, destinées à la préparation de pâtes pour impression pigmentaire, caractérisées par le fait qu'elles contiennent pondéralement :
- a) de 65 à 75 % d'une phase aqueuse dispersée dont 35 à 50 % de son poids est constitué par un copolymère hydrophile de masse moléculaire supérieure à 3. $10^6$ à base de, en proportions molaires :
  - 0 à 50 % d'acrylamide,
  - 0,008 à 0,1 % d'acide bisacrylamidoacétique partiellement ou totalement salifié par de l'ammoniac,
  - le complément à 100 % par de l'acide acrylique dont 65 à 100 % est sous la forme d'acrylate d'ammonium.
- b) de 3 à 7 % d'un système émulsifiant, présentant globalement une valeur HLB supérieure à 7, constitué par un mélange d'au moins trois tensioactifs dont plus de 50 % en poids est apporté par au moins un tensioactif de HLB compris entre 3 et 5 et le complément à 100 % par au moins deux tensioactifs présentant individuellement un HLB compris entre 11 et 14,
- c) Le complément à 100 % par une phase huile constituée par un ou plusieurs hydrocarbures liquides à la température ambiante, contenant moins de 20 % en poids d'hydrocarbures aromatiques et possédant simultanément une masse volumique, déterminée à 20°C, supérieure à 0,8 g/cm³, une viscosité cinématique, déterminée à 20°C, supérieure à 10 mm²/s et un point d'ébullition supérieur à 250°C.

2. Dispersions selon la revendication 1 caractérisées en ce que le copolymère hydrophile est à base de, en porportions molaires :
  - 30 à 40 % d'acrylamide,
  - 0,008 à 0,05 % de bisacrylamidoacétate d'ammonium,
  - le complément à 100 % par de l'acrylate d'ammonium.

3. Dispersions selon la revendication 2 caractérisées en ce que le copolymère hydrophile est à base de,

8

en proportions molaires :
- 25 à 50 % d'acrylamide,
- 0,008 à 0,05 % d'acide bisacrylamidoacétique dont plus de 50 % est sous la forme de bisacrylamidoacétate d'ammonium ;
- le complément à 100 % par de l'acide acrylique dont 65 % à 75 % est sous forme d'acrylate d'ammonium.

4. Dispersions selon la revendication 1 caractérisées en ce que le polymère hydrophile est à base de, en proportions molaires :
- 5 % d'acrylamide,
- 0,008 à 0,05 % d'acide bisacrylamidoacétique dont plus de 50 % est sous la forme de bisacrylamidoacétate d'ammonium,
- le complément à 100 % par de l'acide acrylique dont 65 % à 75 % est sous la forme d'acrylate d'ammonium.

5. Procédé de fabrication des dispersions eau dans huile de polymères hydrophiles selon l'une quelconque des revendications 1 à 4 caractérisé en ce que :

a) l'on prépare une solution aqueuse des monomères à une concentration comprise entre 35 et 50 % en poids et présentant un pH compris entre 5,2 et 7 ;

b) l'on émulsionne ensuite à l'aide d'une turbine, en atmosphère inerte, la solution aqueuse des monomères précédente dans la phase huile en présence du ou des tensioactifs de HLB inférieur à 5 jusqu'à obtention d'une émulsion eau dans huile présentant un palier de viscosité compris entre 3 et 4 Pa.s ;

c) l'on amorce la polymérisation en introduisant dans l'émulsion obtenue parfaitement désoxygénée, sous agitation, en atmosphère inerte et à une température comprise entre 5 et 15°C, moins de 0,05 % en poids par rapport au poids des monomères mis en oeuvre, d'un système amorceur rédox liposoluble générateur de radicaux libres puis qu'on laisse se développer la réaction de polymérisation sans refroidissement extérieur, de manière quasi adiabatique et qu'enfin l'on termine la polymérisation par un chauffage à une température voisine de 80°C ;

d) l'on concentre si nécessaire, le milieu réactionnel par distillation sous vide à une température inférieure à 65°C afin d'obtenir la teneur en matières sèches désirée et qu'enfin l'on incorpore sous agitation le reste des tensioactifs et, si désiré, des additifs habituels à ce type de dispersion.

6. Procédé selon la revendication 5 caractérisé par le fait que la copolymérisation a lieu à pH compris entre 5,2 et 7.

7. Application des dispersions selon l'une quelconque des revendications 1 à 4 caractérisée par le fait que lesdites dispersions sont utilisées pour l'obtention de pâte d'impression pigmentaire.

## Patentansprüche

1. Stabile Wasser-in-Öl-Dispersionen von hydrophilen Polymeren auf Basis von mit Ammoniak teilweise oder zur Gänze in ein Salz übergeführter Acrylsäure zur Herstellung von Farbdruckpasten, dadurch gekennzeichnet, daß sie

- a) 65 bis 75 Gew.% einer dispergierten wässerigen Phase, wobei 35 bis 50 % ihres Gewichts aus einem hydrophilen Copolymer mit einer Molmasse von über $3.10^6$ auf Basis von
  - 0 bis 50 Mol-% Acrylamid,
  - 0,008 bis 0,1 Mol-% teilweise oder zur Gänze mit Ammoniak in ein Salz übergeführter Bisacrylamidoessigsäure,
  - Acrylsäure als Rest auf 100 Mol-%, wovon 65 bis 100 % in Form von Ammoniumacrylat sind, bestehen;

- b) 3 bis 7 Gew.% eines Emulgatorsystems, das in seiner Gesamtheit einen HLB-Wert von mehr als 7 aufweist und aus einer Mischung von mindestens drei Tensiden besteht, wovon mehr als 50 Gew.% von mindestens einem Tensid mit einem HLB zwischen 3 und 5 stammen und der Rest auf 100 % von mindestens zwei Tensiden mit jeweils einem HLB zwischen 11 und 14 gebildet ist; und

- c) als Rest auf 100 Gew.% eine Ölphase, die aus einem oder mehreren bei Umgebungstemperatur flüssigen Kohlenwasserstoffen besteht, enthaltend weniger als 20 Gew.% aromatische Kohlenwasserstoffe und mit einer bei 20°C bestimmten Dichte (volumenbezogenen Masse) von mehr als 0,8 g/cm$^3$, einer bei 20°C bestimmten kinematischen Viskosität von mehr als 10 mm$^2$/s und einem Siedepunkt von über 250°C, enthalten.

2. Dispersionen nach Anspruch 1, dadurch gekennzeichnet, daß das hydrophile Copolymer auf
- 30 bis 40 Mol-% Acrylamid,
- 0,008 bis 0,05 Mol-% Ammoniumbisacrylamidoacetat und

– Ammoniumacrylat als Rest auf 100 Mol-% basiert.

3. Dispersionen nach Anspruch 2, dadurch gekennzeichnet, daß das hydrophile Copolymer auf

– 25 bis 50 Mol-% Acrylamid,

– 0,008 bis 0,05 Mol-% Bisacrylamidoessigsäure, wovon mehr als 50 % in Form des Ammoniumbisacryl-lamidoacetats sind, und

– Acrylsäure als Rest auf 100 Mol-%, wovon 65 bis 75 % in Form des Ammoniumacrylats sind, basiert.

4. Dispersionen nach Anspruch 1, dadurch gekennzeichnet, daß das hydrophile Copolymer auf

– 5 Mol-% Acrylamid,

– 0,008 bis 0,05 Mol-% Bisacrylamidoessigsäure, wovon mehr als 50 % in Form des Ammoniumbisacryl-lamidoacetats sind, und

– Acrylsäure als Rest auf 100 Mol-%, wovon 65 bis 75 % in Form des Ammoniumacrylats sind, basiert.

5. Verfahren zur Herstellung von Wasser-in-Öl-Dispersionen von hydrophilen Polymeren nach einem der Ansprüche 1 bis 4, dadurch gekennzeichnet, daß:

a) eine wässerige Monomerlösung mit einer Konzentration zwischen 35 und 50 Gew.% und einem pH zwischen 5,2 und 7 hergestellt wird;

b) danach mit Hilfe einer Turbine in inerter Atmosphäre die wässerige Monomerlösung in der Ölphase in Gegenwart des oder der Tenside mit einem HLB von weniger als 5 emulgiert wird, bis eine Wasser-in-Öl-Emulsion mit einem Viskositätsbereich zwischen 3 und 4 Pa.s erhalten wird;

c) die Polymerisation eingeleitet wird, indem in die erhaltene vollständig desoxygenierte Emulsion unter Rühren in inerter Atmosphäre und bei einer Temperatur zwischen 5 und 15°C weniger als 0,05 Gew.%, bezogen auf das Gewicht der eingesetzten Monomere, eines fettlöslichen Redoxstartersystems als Erzeuger von freien Radikalen eingebracht wird, dann die Polymerisationsreaktion ohne äußere Kühlung sozusagen adiabatisch ablaufen gelassen wird, und schließlich die Polymerisation durch Erhitzen auf eine Temperatur nahe 80°C beendet wird;

d) falls erforderlich, das Reaktionsmedium durch Destillation unter Vakuum bei einer Temperatur unter 65°C konzentriert wird, um den gewünschten Gehalt an Trockensubstanzen zu erreichen, und schließlich unter Rühren der Rest der Tenside und gewünschtenfalls der bei dieser Dispersionsart üblichen Additive eingearbeitet wird.

6. Verfahren nach Anspruch 5, dadurch gekennzeichnet, daß die Copolymerisation bei einem pH zwischen 5,2 und 7 stattfindet.

7. Verwendung der Dispersionen nach einem der Ansprüche 1 bis 4, dadurch gekennzeichnet, daß die Dispersionen zur Herstellung einer Farbdruckpaste verwendet werden.

## Claims

1. Stable water in oil dispersions of hydrophilic polymers based on acrylic acid partially or totally converted into the salt form with ammonia, intended for the preparation of pastes for colour printing , characterized by the fact that they contain by weight :

- a) 65 to 75% of an aqueous dispersed phase, 35 to 50% of the weight of the said aqueous dispersed phase being constituted by a hydrophilic copolymer, having a molecular weight greater than 3,000,000 formed, in molar proportions, from :

– 0 to 50% acrylamide,

– 0.008 to 0.1% bisacrylamidoacetic acid partially or totally converted into the salt form with ammonia,

– made up to 100% with acrylic acid, of which 65 to 100% is in the form of ammonium acrylate,

- b) 3 to 7% of an emulsifying system, having overall an HLB value greater than 7, constituted by a mixture of at least three surface active agents, of which more than 50% by weight is contributed by at least one surface active agent having an HLB between 3 and 5, and the complement to 100% being contributed by at least two surface active agents individually having an HLB between 11 and 14,

- c) the complement to 100% is an oil phase constituted by one or a plurality of hydrocarbons which are liquid at ambient temperature, containing less than 20% by weight of aromatic hydrocarbons and having simultaneously a density, determined at 20°C, greater than 0.8 g/cm$^3$, a kinematic viscosity, determined at 20°C, greater than 10 mm$^2$/s and a boiling point above 250°C.

2. Dispersions according to claim 1, characterized in that the hydrophilic copolymer is based, in molar proportions, on :

– 30 to 40% acrylamide,

– 0.008 to 0. 05% ammonium bisacrylamidoacetate,

– the complement to 100% ammonium acrylate.

3. Dispersions according to claim 2, characterized in that the hydrophilic copolymer is based, in molar proportions, on :
- 25 to 50% acrylamide,
- 0.008 to 0.05% bisacrylamidoacetic acid of which more than 50% is in the form of ammonium bisacrylamidoacetate,
- the complement to 100% is acrylic acid, of which 65 to 75% is in the form of ammonium acrylate.

4. Dispersions according to claim 1, characterized in that the hydrophilic polymer is based, in molar proportions, on :
- 5% acrylamide,
- 0.008 to 0.05% bisacrylamidoacetic acid of which more than 50% is in the form of ammonium bisacrylamidoacetate,
- the complement to 100% is acrylic acid, of which 65 to 75% is in the form of ammonium acrylate.

5. A method for producing water in oil dispersions of hydrophilic polymers according to any one of claims 1 to 4, characterized in that :

a) an aqueous solution of monomers is prepared having a concentration between 35 and 50% by weight and a pH between 5.2 and 7,

b) the aqueous solution of the above monomers is then emulsified in the oil phase by means of a turbine, in an inert atmosphere, in the presence of a surface active agent or agents having an HLB less than 5, until a water in oil emulsion is obtained having a viscosity value between 3 and 4 Pa. s,

c) polymerization is initiated by introducing into the fully deoxygenated emulsion obtained, with stirring, in an inert atmosphere and at a temperature between 5 and 15°C, less than 0.05% by weight, relative to the weight of monomers used, of a liposoluble redox initiating system generating free radicals, then the polymerization reaction is left to develop without external cooling in a quasi-adiabatic manner, and finally the polymerization is terminated by heating at a temperature close to 80°C,

d) if necessary, the reaction medium is concentrated by vacuum distillation at a temperature less than 65°C in order to obtain the desired dry weight content, and finally the remainder of the surface active agent, optionally with additives usual for this kind of dispersion, is incorporated with stirring.

6. A method according to claim 5, characterized in that the copolymerization occurs at a pH between 5.2 and 7.

7. Use of the dispersions according to any one of claims 1 to 4 characterized in that the said dispersions are used to prepare a colour printing paste.